# EUROPÄISCHE PATENTSCHRIFT

(11) **EP 0 493 542 B1**
(45) Veröffentlichungstag und Bekanntmachung des Hinweises auf die Patenterteilung: **30.08.1995**
(21) Anmeldenummer: 91910834.0
(22) Anmeldetag: 27.06.1991
(51) Int. Cl.: G01L 9/00, G01L 23/18

(54) **DRUCKGEBER ZUR DRUCKERFASSUNG IM BRENNRAUM VON BRENNKRAFTMASCHINEN**
PRESSURE SENSOR FOR DETERMINATION OF THE PRESSURE IN A COMBUSTION CHAMBER OF AN INTERNAL-COMBUSTION ENGINE
CAPTEUR DE PRESSION POUR LA DETERMINATION DE LA PRESSION DANS LA CHAMBRE DE COMBUSTION D'UN MOTEUR A COMBUSTION INTERNE

(30) Priorität: 18.07.1990 DE 4022782
(43) Veröffentlichungstag der Anmeldung: 08.07.1992
(73) Patentinhaber: ROBERT BOSCH GMBH, 70442 Stuttgart (DE)
(72) Erfinder: BENEDIKT, Walter, D-7014 Kornwestheim (DE); VOGEL, Manfred, D-7257 Ditzingen Heimerdingen (DE); HERDEN, Werner, D-7016 Gerlingen (DE); KONRAD, Johann, D-7146 Tamm (DE); SCHMIDT, Wolfgang, D-7143 Vaihingen/Enz (DE); TOSCH, Josef, D-7141 Schwieberdingen (DE); KUESSEL, Matthias, D-7015 Korntal-Münchingen 2 (DE)
(86) Internationale Anmeldenummer: DE9100526
(87) Internationale Veröffentlichungsnummer: WO9201914

(56) Entgegenhaltungen:
- EP-A- 0 352 773
- CA-A- 886 783
- FR-A- 2 626 670
- US-A- 4 620 438
- US-A- 4 645 965

## Beschreibung

Die Erfindung geht aus von einem Druckgeber nach der Gattung des Anspruchs 1. Bei einem derartigen, aus der DE-OS 31 25 640.6 bekannten Druckgeber sind die piezoresistiven Meßelemente, wie zum Beispiel Dickschichtwiderstände aus Cermet, Contactiv, Plastic oder Platin auf einem Träger aufgedruckt. Das Widerstandselement und der Träger sind möglichst nahe am Druckraum angeordnet, um den dort herrschenden Druck bestimmen zu können. Ferner wird das Meßsignal mit Hilfe von elektrischen Leitungen zu einer außerhalb des Gehäuses des Druckgebers angeordneten elektronischen Auswerteschaltung geführt. Dadurch müssen die piezoresistiven Elemente und die elektronischen Bauteile mit Hilfe von isolierten Drahtstücken aufwendig miteinander verbunden werden. Da das piezoresistive Meßelement direkt dem Druck ausgesetzt ist, ist es auch den im Brennraum herrschenden hohen Temperaturen ausgesetzt. Die Flammen breiten sich dort mit einer Temperatur von ca. 2000° C aus, wodurch sich Verspannungen im Gehäuse ergeben können. Dadurch wird das Drucksignal durch die hohen Temperaturen verfälscht.

In der EP-0 352 773 A2, die die Grundlage für den Oberbegriff des Patentanspruchs 1 bildet, wird ein Drucksensor beschrieben, bei dem sich auf einem Halbleitersiliziumkristall drei im Winkel von 45° Grad zueinander angebrachte Elektroden zur Erzeugung eines Meßsignals befinden. Der Siliziumkristall ist auf einem Gegenlager aufgebracht. Der Druck wird über eine Membran und einen Stempel auf den Siliziumkristall und somit auf die Meßelektroden eingeleitet. Das erzeugte Meßsignal wird aber mit Hilfe von relativ langen Leitungen einer Auswerteeinrichtung zugeführt. Aufgrund dieses relativ langen Übertragungsweges können die Meßsignale relativ leicht verfälscht werden.

In der US-A-4 645,965 wird ein Drucksensor erwähnt, der zur Druckseite hin von einer Membran abgeschlossen wird. Mit Hilfe eines Stempels wird der eingeleitete Druck auf piezoelektrische Mittel zur Umwandlung des Drucks in ein elektrisches Signal geleitet. Gehäuseschultern dienen hierbei als Gegenlager für den Stempel. Durch eine Bohrung im Gehäuse wird das elektrische Signal zu einer in einer Gehäuseausnehmung angeordneten elektrischen Schaltung zugeführt. Auch hier ist das Meßelement und die elektrische Schaltung relativ weit voneinander angeordnet.

Ferner ist aus der EP-A- 179 278 ein Drucksensor bekannt, bei dem der Dickschichtwiderstand am Boden eines Trägers angeordnet ist. Dieser Drucksensor ist aber nur für die Bestimmung des Drucks in Verteilerpumpen vorgesehen. Die im Brennraum herrschenden hohen Temperaturen würden auch bei dieser Ausführung das Meßsignal verfälschen.

### Vorteile der Erfindung

Der erfindungsgemäße Drucksensor mit den Merkmalen des Patentanspruchs 1 hat demgegenüber den Vorteil, daß das piezoresistive Meßelement relativ weit vom Brennraum und den dort herrschenden hohen Temperaturen entfernt ist, so daß das Meßsignal nicht durch die im Brennraum herrschenden Temperaturen verfälscht wird. Durch die Anordnung des piezoresistiven Meßelements und des Hybrids auf dem Gegenlager des Stempels können in der Praxis erprobte Standardbondtechniken zur Verbindung der elektronischen Bauteile und der Piezoelemente angewendet werden. Als Material für den Träger des Hybrids, der in vorteilhafter Weise gleichzeitig auch als Träger für die Dickschichtwiderstände und Halbleiterbauteile verwendet werden kann, können die verschiedenen, den jeweiligen Drucktechniken angepaßten Materialien verwendet werden. Der Hybrid kann in einem Arbeitsgang gleichzeitig mit den Leiterbahnen und den Kontaktflächen für den piezoresistiven Effekt bedruckt werden. Der gesamte Hybrid, einschließlich der elektronischen Bauteile zur Signalaufbereitung und der piezoresistiven Elemente kann vor dem Einbau in das Sensorgehäuse überprüft werden. Dadurch ist eine einfache Montage des Drucksensors möglich. Befinden sich das piezoresistive Meßelement und die elektronischen Bauteile auf einem gemeinsamen Träger, und sind diese Bauteile auf der der Membran zugewandten Seite des Gegenlagers angeordnet, so kann seine Baulänge verkürzt werden. Ohne aufwendige Umkonstruierungen kann der Hybrid auch in Achsrichtung des Drucksensors in dessen Gehäuse eingebaut werden. Wird zum Beispiel eine flexible Kapton^{(R)}-Folie verwendet, so können die piezoresistiven Meßelemente und elektronischen Bauteile ebenfalls in einem Arbeitsvorgang aufgedruckt werden. Ferner ergibt sich durch diese Bauform eine besonders schmale Form des Drucksensors. Der Drucksensor ist kostengünstig herstellbar. Aufgrund der räumlichen Anordnung, insbesondere durch die Anordnung auf demselben Hybrid in unmittelbarer Nachbarschaft zueinander, herrscht bei den elektronischen Bauteilen und den piezoresistiven Elementen nahezu die gleiche Temperatur. Aufwendige Maßnahmen zur Temperaturkompensation können dadurch entfallen. Ein Funktionsabgleich der piezoresistiven Meßelemente kann durch einfaches konventionelles Laserritzen bzw. Lasertrimmen der Widerstände bewirkt werden. Mit Hilfe von elektronischen Bauteilen ist es möglich, eine Kompensation des systematischen Temperaturgangs der Piezo-Meßelemente zu ermöglichen. Außerdem kann der elektrische Anschluß der Meßelemente nicht mit den Gehäuseleitern verbunden sein, wodurch ein potentialfreier Aufbau des Sensors möglich ist und somit das Meßsignal nahezu fehlerfrei übertragen wird.

Durch die in den abhängigen Patentansprüchen aufgeführten Maßnahmen sind vorteilhafte Weiterbildungen des im Anspruch 1 angegebenen Drucksensors möglich.

### Zeichnung

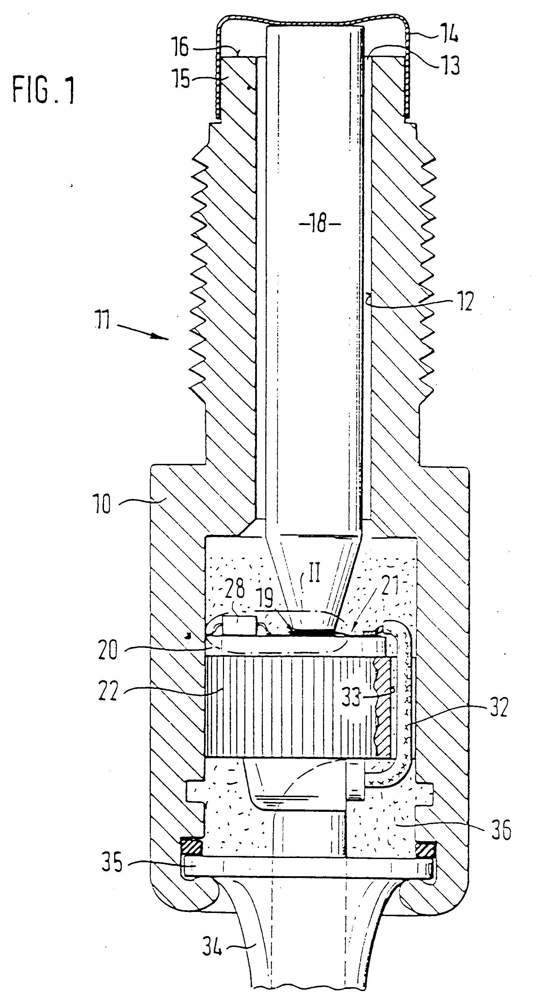

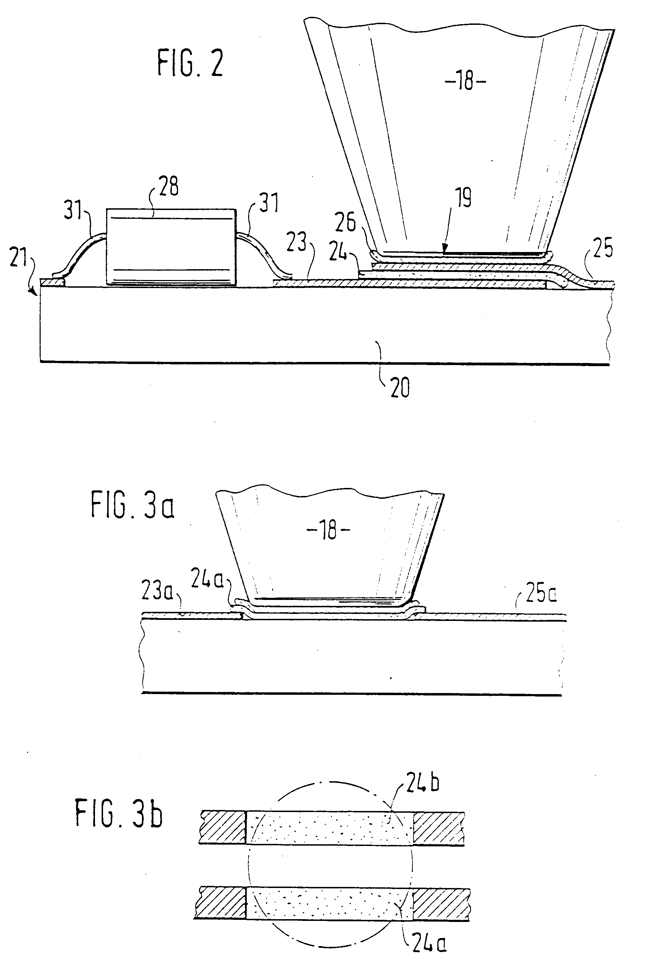

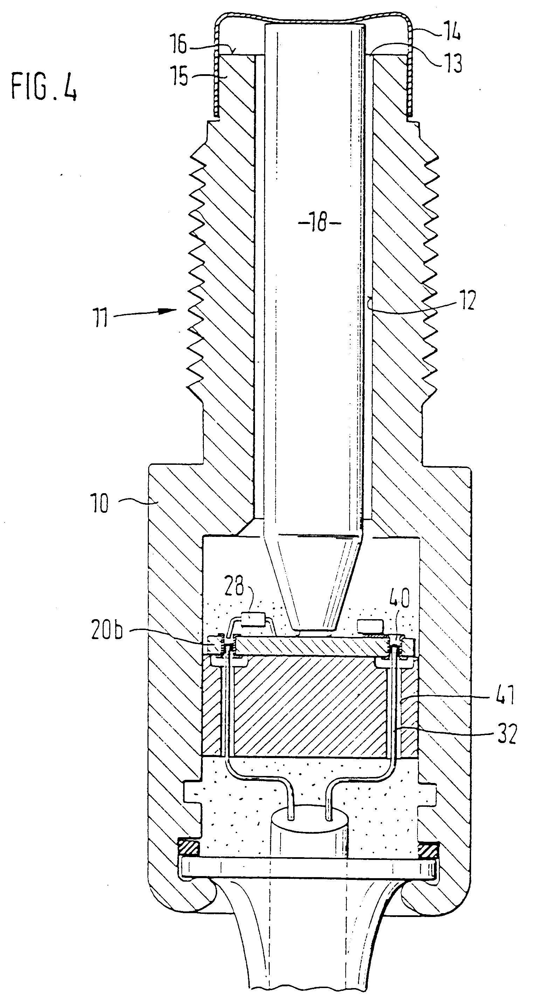

Ausführungsbeispiele der Erfindung sind in der Zeichnung dargestellt und in der nachfolgenden Beschreibung näher erläutert. Die Figur 1 zeigt einen Schnitt durch einen Druckgeber, Figur 2, Figur 3a, Figur 3b jeweils eine Einzelheit und Figur 4 bis Figur 7 jeweils eine Abwandlung des Ausführungsbeispiels nach Figur 1.

### Beschreibung der Ausführungsbeispiele

In der Figur 1 ist mit 10 das Gehäuse eines Drucksensors 11 zur Bestimmung des Drucks im Brennraum einer Brennkraftmaschine bezeichnet. Es weist eine mittige, durchgehende, abgesetzte Bohrung 12 auf.

Die dem Brennraum zugewandte Öffnung 13 des Gehäuses 10 wird von einer Membran 14 abgeschlossen. Die Membran 14 ist als sogenannte Kappenmembran ausgebildet, wobei der Rand der Membran 14 umgebogen ist und über das Ende des Schafts 15 des Gehäuses 10 geschoben ist. Die Membran 14 sitzt dadurch fest am Gehäuse, liegt aber, um eine Beweglichkeit der Membran 14 zu gewährleisten, nicht direkt an der Stirnseite 16 des Schafts 15 an. Der Biegebereich der Membran 14 kann sich dadurch frei bewegen. Die Membran 14 ist im Bereich des Randes am Schaft 15 angeschweißt. Besonders vorteilhaft ist die Membran 14 aus einer Superlegierung, das heißt aus einer Legierung von zum Beispiel ca. 50 % Ni, 20 % Cr, 20 % Fe ausgebildet. Am mittleren Bereich der Membran 14 liegt ein Stempel 18 mit seinem einen Ende an, der mit seinem anderen Ende an einem piezoresistiven Meßelement 19 anliegt. Unter piezoresistiven Meßelementen sind Elemente zu verstehen, die ihren Widerstandswert unter Druckeinwirkung ändern. Hierzu können zum Beispiel Dickschichtwiderstände verwendet werden. Als Materialien können hierzu Cermet, Contactiv, Plastic oder Platin etc. Verwendung finden. Das Meßelement 19 ist auf den Träger 20 eines Hybrids 21 aufgedruckt. Unter einem Hybrid ist normalerweise ein Träger mit aufgedruckten Schaltungsteilen, wie zum Beispiel Widerständen etc., Leiterbahnen und einem IC (integrated circuit), der auf den Träger aufgesetzt ist und mit den Schaltungsteilen zum Beispiel durch Bonddrähte verbunden ist, zu verstehen. Der Stempel 18 selbst kann aus Glaskeramik bestehen, um somit eine gute Wärmeisolierung zwischen der Membran, das heißt zwischen dem Druckraum dessen Druck bestimmt werden soll und dem piezoresistiven Meßelement zu gewährleisten. Das dem Hybrid 21 zugewandte Ende des Stempels 18 kann konisch ausgebildet sein, so daß sein Ende etwa den Durchmesser des Meßelements 19 aufweist. Dadurch ist es moglich, den Stempel 18 in der Bohrung 12 zu führen, hingegen aber der bereich der Druckübertragung auf die Größe des Meßelementes 19 zu begrenzen. Der Träger 20 des Hybrids liegt ferner an einem in die Bohrung 12 eingepreßten Gegenlager 22 an.

Der Hybrid 21 und das Ende des Stempels 18 ist in den Figuren 2, 3a und 3b näher dargesellt. Der Träger 20 besteht aus einer Al₂O₃-Substratschicht, auf der eine erste Kontaktschicht 23 aufgedruckt ist. In einem nachfolgenden Druckvorgang sind auf die erste Leiterbahn 23 die piezoresistive Widerstandsschicht 24 und anschließend die zweite Leiterbahn 25 aufgedruckt. Das Ende des Stempels 18 ist mit Hilfe einer glasartigen Masse 26 auf der zweiten Leiterbahn 25 befestigt, um dadurch eine gleichmäßige Krafteinleitung auf das Widerstandselement 24 zu ermöglichen und um den Stempel zu fixieren. Ferner sind auf dem Träger 20 des Hybrids 21 die elektronischen Bauteile 28, wie zum Beispiel Widerstände, Transistoren, etc. angeordnet. Die elektronischen Halbleiterbauteile 28 und die Leiterbahnen sind mit Hilfe von Bonddrähten 31 verbunden. Der Ausgang der Aufbereitungselektronik ist mit Hilfe einer Leitung 32 mit einer nicht dargestellten, außerhalb des Sensors befindlichen Auswerteschaltung und Steuereinrichtung der Brennkraftmaschine verbunden. Hierzu ist im Gegenlager 22 eine achsparallel zur Bohrung 12 verlaufende, durchgehende Bohrung 33 ausgebildet, in der die Ableitung 32 geführt wird. Die Leitung 32 ist in einer Tülle 34 des die Bohrung 12 abschließenden Deckels 35 befestigt. Statt einer Bohrung 33 kann auch am Gegenlager 20 ein Segment zur Durchführung der Leitung 32 ausgeschnitten sein.

Zum Schutz vor schädlichen Umwelteinflüssen, wie z. B. Feuchtigkeit, ist die Bohrung 12 im Bereich der elektronischen Bauteile 28 und/oder im Bereich zwischen dem Gegenlager 22 und dem Deckel 35 mit einer Vergußmasse 36 ausgegossen.

In der Figur 2 sind die Widerstände 24 in Stromrichtung gedrückt, wobei eine sehr hochohmige Widerstandspaste verwendet werden sollte. Dadurch erhält man gegenüber herkömmlichen Anordnungen ein größeres Meßsignal bei gleichbleibender Größe der eingeleiteten Kraft.

In der Ausbildung nach der Figur 3a sind die Widerstände 24a quer zur Stromrichtung auf dem Träger aus Al₂O₃-Substrat des Hybrids 21 aufgedruckt. In einer Abwandlung zur Ausführung nach der Figur 2 sind in der Figur 3a die erste Leiterbahn 23a und die zweite Leiterbahn 25a auf den Träger 20 aufgedruckt. Zwischen den beiden Enden der Leiterbahnen 23a, 25a ist die Widerstandsschicht 24a aufgedruckt. Die jeweiligen Enden der Widerstandsschicht und der ersten Leiterbahnen 23a bzw. der zweiten Leiterbahn 25a überlappen sich jeweils. Dieser Überlappungsbereich liegt aber außerhalb des Kraftübertragungsbereichs des Stempels 18. Wie aus der Figur 3b ersichtlich ist, ist es auch möglich, mehrere Widerstände als Teil einer sogenannten Wheatstone'schen Brückenschaltung auf den Träger aufzudrucken. Dabei sollten sich jeweils zwei gegenüberliegende Widerstände der Brückenschaltung im Krafteinleitungsbereich des Stempels 18 befinden, während die beiden anderen Widerstände in unmittelbarer Umgebung der Widerstände aufgedruckt sein sollen, aber in einem Bereich, in dem der durch den Stempel 18 eingeleitete Druck nicht wirksam ist. Die im Bereich der Druckeinleitung aufgedruckten Widerstände 24a, 24b sowie die beiden Widerstände in der Umgebung, sind in gleicher Technologie zu realisieren, so daß sich ein annähernd gleiches Temperaturverhalten sowie eine Langzeitstabilität der Widerstände ergibt. Diese Form der Anordnung der Widerstände ist besonders einfach in Dickschichttechnik realisierbar. Durch das gute Temperaturverhalten ist es ferner möglich, auf einen aufwendigen Wechselspannungsverstärker als Aufbereitungselektronik zu verzichten. Dadurch brauchen auf dem Träger des Hybrids nur noch ein aus wenigen Widerständen und einem Operationsverstärker bestehender Gleichspannungsverstärker angeordnet zu werden. Da nur noch wenige Bauteile für die Aufbereitungsschaltung notwendig sind, baut der Hybrid relativ klein und somit kann auch der Querschnitt des Drucksensors relativ klein gehalten werden. Diese Konstruktion führt somit zu einem Brennraumsensor mit geringem Bauvolumen, der realtiv einfach und kostengünstig baut.

Statt einer am Rande des Hybrids vorgenommenen Ableitung des Meßsignals mit Hilfe der Leitung 32 und der Bohrung 33 ist es auch möglich, im Träger 20b des Hybrids 21 Bohrungen 40 vorzusehen. Hierzu sind auch im Gegenlager 22 Bohrungen 41 auszubilden. Durch diese Bohrungen 40, 41 wird dann die Leitung 32 zu den elektrischen Bauteilen 28 des Hybrids 21 bzw. deren Leiterbahnen geführt. Vorteilhafterweise sind hierzu Leiterbahnen des Hybrids durch die Bohrungen 40 hindurchgeführt und mit der Leitung 32 auf der Unterseite des Trägers 20b kontaktiert (siehe Figur 4).

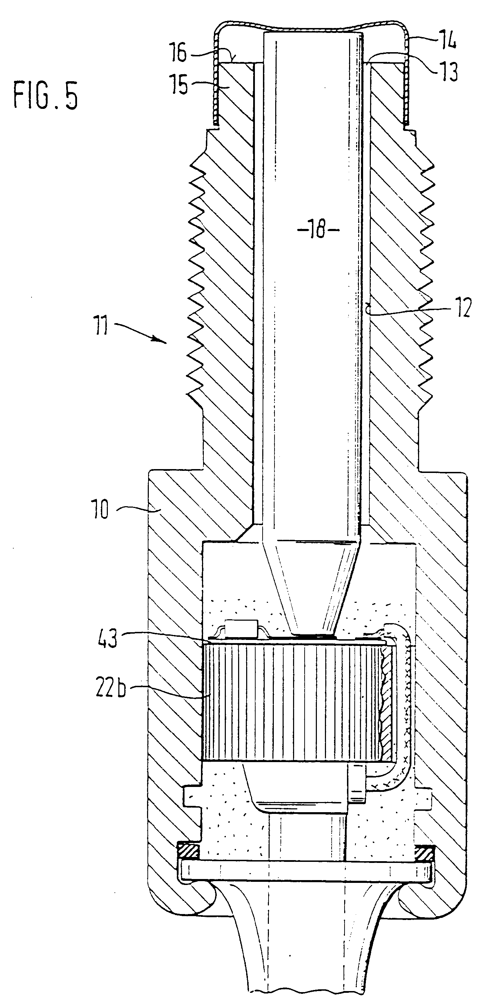

Die Ausbildungen nach den Figuren 5 bis 7 stellen besondere Ausbildungen des Trägers 20 des Hybrids 21 und die Anordnung der elektronischen Bauteile 28 des Hybrids 21 dar. In der Figur 5 sind hierbei die elektronischen Bauteile 28 des Hybrids 21 direkt auf dem metallischen Gegenlager 22b aus metallischem Werkstoff aufgebracht. Als Werkstoff des Gegenlagers kann zum Beispiel SiCrAl verwendet werden. Hierzu ist das Gegenlager 22b auf der dem Stempel 18 zugewandten Seite durch eine in Dickschichttechnik aufgebrachte Glasschicht 43 elektrisch isoliert. Anschließend werden die Bauteile 28 und das piezoresistive Meßelement 19, wie bei der Figur 1, aufgebracht. Bei dieser Ausführungsform ist es möglich, die Klebeverbindung zwischen dem Träger 20 aus Al₂O₃-Substrat und dem Gegenlager 22 einzusparen.

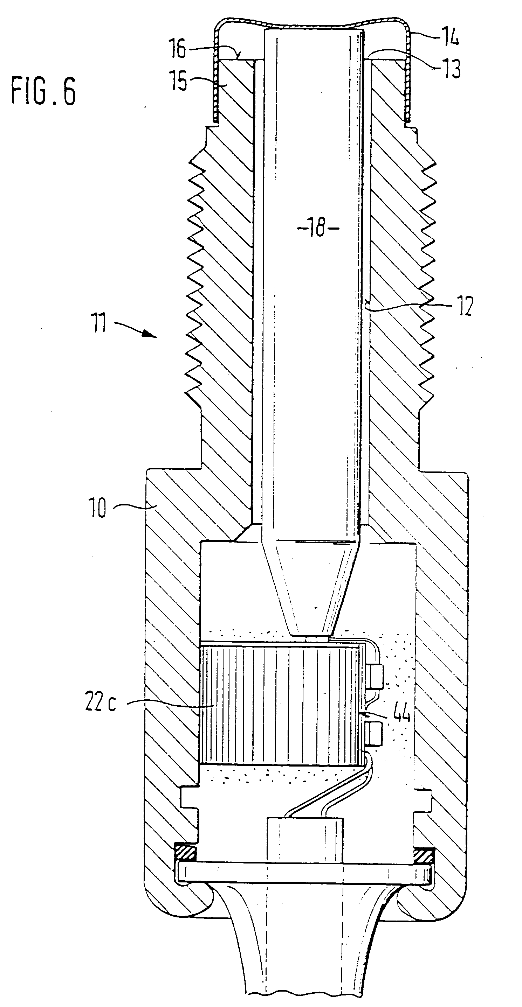

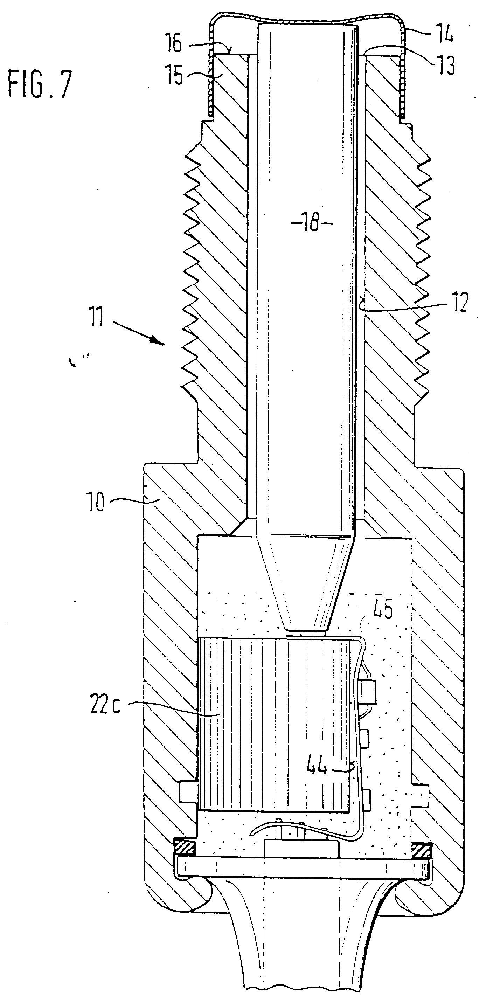

In den Ausführungsbeispielen nach Figur 6 und Figur 7 ist der Hybrid 21 in Achsrichtung des Drucksensors 11 angeordnet. Dadurch baut der Drucksensor 11 zwar in Achsrichtung länger, es ist aber eine besonders schmale Bauweise des Drucksensors 11 möglich. Dadurch kann der Drucksensor 11 in besonders einfacher Weise an spezielle Einbausituationen in der Brennkraftmaschine angepaßt werden. Im Unterschied zu den bisherigen Ausführungsbeispielen ist der Hybrid 21 nur um 90° gekippt. Hierzu ist das Gegenlager nicht mehr zylindrisch auszubilden, sondern muß auf einer Seitenfläche eine ebene Fläche 44 aufweisen, auf der der Hybrid aufgebracht ist. Der Träger des Hybrids ist dann auf dieser Seite und auch auf der dem Stempel 18 zugewandten Stirnseite des Gegenlagers 22c aufgebracht. Hierbei ist es wieder möglich, als Werkstoff für den Träger eine Glasschicht zu verwenden. Es kann aber auch, wie in Figur 7, eine flexible Kapton^{(R)}-Folie 45 als Träger für den Hybrid 21 verwendet werden. Kapton^{(R)}-Folien sind im Handel erhältlich und weisen folgende Eigenschaften auf: hohe Temperaturbeständigkeit, gute Isolationsfestigkeit sowie hohe Flexibilität.

## Patentansprüche

1. Druckgeber (11) zur Druckerfassung im Brennraum von Brennkraftmaschinen, insbesondere von Kraftfahrzeugen, in dessen Gehäuse (10) ein aus einem piezoresistiven Werkstoff bestehendes Sensorelement (19) angeordnet ist, wobei zwischen einer Membran (14), die im Verwendungsfall dem Brennraum zugewandt ist, und dem Sensorelement (19) ein Stempel (18) angeordnet ist, der den zu bestimmenden Druck auf das Sensorelement (19) einleitet, dadurch gekennzeichnet, daß sich das Sensorelement (19) und ein Hybrid (21) mit seinem Träger (20) und den darauf angeordneten elektronischen Bauteilen (28) der Aufbereitungsschaltung für das vom Sensorelement (19) stammende Meßsignal auf einem Gegenlager (22) des Stempels (18) befinden, und daß das Sensorelement (19) auf dem Träger (20) des Hybrids (21) angeordnet ist.

2. Druckgeber nach Anspruch 1, dadurch gekennzeichnet, daß der Hybrid (21) auf der dem Stempel (18) zugewandten Seite des Gegenlagers (22) angeordnet ist.

3. Druckgeber nach Anspruch 1, dadurch gekennzeichnet, daß der Hybrid (21) in Achsrichtung des Drucksensors (11) auf einer Fläche des Gegenlagers (22) angebracht ist.

4. Druckgeber nach einem der Ansprüche 1 bis 3, dadurch gekennzeichnet, daß der Träger (20) des Hybrids (21) aus Al₂O₃ besteht.

5. Druckgeber nach einem der Ansprüche 1 bis 3, dadurch gekennzeichnet, daß der Träger (20) des Hybrids (21) aus einer flexiblen Folie mit hoher Temperaturbeständigkeit, guter Isolationsfähigkeit sowie hoher Flexibilität besteht.

6. Druckgeber nach einem der Ansprüche 1 bis 3, dadurch gekennzeichnet, daß der Träger (20) des Hybrids (21) aus SiCrAl beseht.

7. Druckgeber nach Anspruch 6, dadurch gekennzeichnet, daß sich zwischen dem Träger (20) des Hybrids (21) aus SiCrAl und den Bauteilen eine Isolationsschicht aus Glas befindet.

8. Druckgeber nach einem der Ansprüche 1 bis 3, dadurch gekennzeichnet, daß das Gegenlager (22) aus SiCrAl besteht und als Träger (20) des Hybrids (21) dient.

9. Druckgeber nach einem der Ansprüche 1 bis 5, dadurch gekennzeichnet, daß die elektronischen Bauteile (28) mit Hilfe von Bonddrähten (31) und Dickschichtleiterbahnen verbunden sind.

10. Druckgeber nach einem der Ansprüche 1 bis 6, dadurch gekennzeichnet, daß die Widerstandsschicht (23, 25) des piezoresistiven Elements (19) in Richtung des durch die Widerstandsschichten fließenden Stroms aufgedruckt sind.

11. Druckgeber nach einem der Ansprüche 1 bis 7, dadurch gekennzeichnet, daß der Stempel (18) aus Glaskeramik besteht.

12. Druckgeber nach einem der Ansprüche 1 bis 8, dadurch gekennzeichnet, daß das Gegenlager (22) in das Gehäuse (10) eingepreßt ist.

## Claims

1. Pressure sensor (11) for detecting the pressure in the combustion chamber of internal-combustion engines, in particular of motor vehicles, in the housing (10) of which there is arranged a sensor element (19), consisting of a piezoresistive material, a punch (18) being arranged between a diaphragm (14), which faces the combustion chamber when in use, and the sensor element (19), which punch (18) introduces the pressure to be determined onto the sensor element (19), characterised in that the sensor element (19) and a hybrid (21) with its base (20) and the electronic components (28) arranged thereupon of the preprocessing circuit for the measuring signal coming from the sensor element (19) are located on a counter-bearing (22) of the punch (18), and in that the sensor element (19) is arranged on the base (20) of the hybrid (21).

2. Pressure sensor according to Claim 1, characterised in that the hybrid (21) is arranged on the side of the counterbearing (22) facing the punch (18).

3. Pressure sensor according to Claim 1, characterised in that the hybrid (21) is applied in the axial direction of the pressure sensor (11) on a surface of the counterbearing (22).

4. Pressure sensor according to one of Claims 1 to 3, characterised in that the base (20) of the hybrid (21) consists of Al₂O₃.

5. Pressure sensor according to one of Claims 1 to 3, characterised in that the base (20) of the hybrid (21) consists of a flexible film with high temperature resistance, good insulating properties and high flexibility.

6. Pressure sensor according to one of Claims 1 to 3, characterised in that the base (20) of the hybrid (21) consists of SiCrAl.

7. Pressure sensor according to Claim 6, characterised in that between the base (20) of the hybrid (21) of SiCrAl and the components there is an insulation layer of glass.

8. Pressure sensor according to one of Claims 1 to 3, characterised in that the counterbearing (22) consists of SiCrAl and serves as base (20) of the hybrid (21).

9. Pressure sensor according to one of Claims 1 to 5, characterised in that the electronic components (28) are bonded with the aid of bonding wires (31) and thick-film conductor tracks.

10. Pressure sensor according to one of Claims 1 to 6, characterised in that the resistive film (23, 25) of the piezoresistive element (19) is printed on in the direction of the current flowing through the resistive films.

11. Pressure sensor according to one of Claims 1 to 7, characterised in that the punch (18) consists of glass ceramic.

12. Pressure sensor according to one of Claims 1 to 8, characterised in that the counterbearing (22) is pressed into the housing (10).

## Revendications

1. Capteur (11) de la pression régnant dans la chambre de combustion d'un moteur à combustion interne, notamment d'automobile, constitué d'un boîtier (10) contenant un élément sensible (19) constitué d'un matériau piézorésistif, ainsi qu'un poussoir (18) intercalé entre une membrane (14) tournée, en utilisation, vers la chambre de combustion et l'élément sensiblement (19), ce poussoir transmettant la pression à mesurer à l'élément sensible (19), caractérisé en ce que l'élément sensible (19) et un hybride (21), avec son support (20) et les composants électroniques (28), du circuit d'élaboration du signal de mesure provenant de l'élément sensible (19), montés sur ce support, se trouvent sur un contre-palier (22) opposé au poussoir (18), l'élément sensible (19) étant monté sur le support (20) de l'hybride (21).

2. Capteur de pression selon la revendication 1, caractérisé en ce que l'hybride (21) est monté sur la face du contre-palier (22) située en regard du poussoir (18).

3. Capteur de pression selon la revendication 1, caractérisé en ce que l'hybride (21) est monté, parallèlement à l'axe du capteur (11) sur un plat du contre-palier (22).

4. Capteur de pression selon l'une des revendications 1 çà 3, caractérisé en ce que le support (20) de l'hybride (21) est en Al₂O₃.

5. Capteur de pression selon les revendications 1 à 3, caractérisé en ce que le support (20) de l'hybride (21) est constitué par une feuille résistant à la température, bien isolante et très flexible.

6. Capteur de pression selon l'une des revendications 1 à 3, caractérisé en ce que le support (20) de l'hybride (21) est en SiCrAl.

7. Capteur de pression selon la revendication 6, caractérisé en ce qu'une couche d'isolation en verre est interposée entre le support (20) en SiCrAl de l'hybride (21), et les composants.

8. Capteur de pression selon l'une des revendications 1 à 3, caractérisé en ce que le contre-palier (22) est en SiCrAl et sert de support (20) de l'hybride (21).

9. Capteur de pression selon l'une des revendications 1 à 5, caractérisé en ce que les composants électroniques (28) sont reliés par des fils de liaison (31) et des pistes conductrices de la couche épaisse.

10. Capteur de pression selon l'une des revendications 1 à 6, caractérisé en ce que la couche de résistance (23, 25) de l'élément piézorésistif (19) est imprimée dans le sens de circulation du courant traversant les couches de résistance.

11. Capteur de pression selon l'une des revendications 1 à 7, caractérisé en ce que le poussoir (18) est en vitrocérame.

12. Capteur de pression selon l'une des revendications 1 à 8, caractérisé en ce que le contre-palier (22) est emmanché à la presse dans le boîtier (10).
